(19) **Europäisches Patentamt**

**European Patent Office**

**Office européen des brevets**

(11) **EP 1 043 584 A1**

(12) **EUROPEAN PATENT APPLICATION**
published in accordance with Art. 158(3) EPC

(43) Date of publication:
**11.10.2000 Bulletin 2000/41**

(51) Int. Cl.⁷: **G01N 29/10**

(86) International application number:
**PCT/JP98/05607**

(21) Application number: **98959170.6**

(22) Date of filing: **11.12.1998**

(87) International publication number:
**WO 99/34204 (08.07.1999 Gazette 1999/27)**

(84) Designated Contracting States:
**DE GB**

(30) Priority: **25.12.1997 JP 35667297**

(71) Applicant: **NKK CORPORATION**
**Tokyo 100-0005 (JP)**

(72) Inventors:
• **IIZUKA, Yukinori,**
**NKK Corporation**
**Tokyo 100-0005 (JP)**
• **SATO, Akio,**
**NKK Corporation**
**Tokyo 100-0005 (JP)**

• **NAKAZAWA, Shin,**
**NKK Corporation**
**Tokyo 100-0005 (JP)**
• **MURAYAMA, Akira,**
**NKK Corporation**
**Tokyo 100-0005 (JP)**
• **OKAWA, Youji,**
**NKK Corporation**
**Tokyo 100-0005 (JP)**
• **TAKAHASHI, Masanobu,**
**NKK Corporation**
**Tokyo 100-0005 (JP)**

(74) Representative: **HOFFMANN - EITLE**
**Patent- und Rechtsanwälte**
**Arabellastrasse 4**
**81925 München (DE)**

(54) **METHOD AND APPARATUS FOR ULTRASONIC FLAW DETECTION OF WELD PORTION**

(57) An array probe and a wedge are used, the wedge supporting the array probe such that ultrasonic beams emitted from the array probe are at predetermined angles of refraction. A welded portion is subjected to sector scanning in a direction of the depth of the welded portion. A sector scanning angle step is set so that the scanning beams overlap each other in order to carry out flaw detection using ultrasonic waves so that each scanning line focusing point is disposed at the welded portion.

FIG. 1

**Description**

Technical Field

The present invention relates to a method for detecting flaws in a welded portion using ultrasonic waves, more particularly to a method for precisely detecting very small, blow-hole like flaws using ultrasonic waves and an apparatus thereof.

Background Art

Depending on the welding method used, various kinds of flaws occur in a welded portion of, for example, a welded steel pipe. The various types of flaws cause deterioration in the weldability, so that non-destructive inspection becomes particularly important. Typical methods thereof are a method using X-rays and a method using ultrasonic waves.

The method using X-rays is suitable for detecting blow-hole like flaws, and is used to detect flaws in molten welded portions produced by submerged arc welding. However, this method has problems, such as low efficiency and high facility costs. On the other hand, the method using ultrasonic waves does not have the problems characteristic of the method using X-rays. It is a suitable method for detecting planar flaws. However, this method has the problem of low detection capability when it is used to detect blow-hole like flaws. If it is possible to precisely detect very small, blow-hole like flaws with ultrasonic waves, there is considerable merit from the point of view of reducing facility costs. Therefore, investigations have been repeatedly carried out to realize a method for detecting very small, blow-hole like flaws with ultrasonic waves.

An example of such a method of detecting very small flaws in a welded portion with ultrasonic waves is disclosed in Japanese Unexamined Patent Publication No. 60-205356. As shown in Fig. 12, a pair of point-focus type probes 31 arranged at an angle to detect flaws are used, and the point where ultrasonic beams are focused is disposed at a welded portion 2 of a steel pipe 1 in order to increase the capability with which very small flaws are detected.

Another example is disclosed in Japanese Unexamined Patent Publication No. 7-35729. As shown in Fig. 13, point-focus type probes 32 arranged vertically to detect flaws are used, and the point where the ultrasonic beams are focused is disposed at a welded portion 2 of a steel pipe 1 in order to increase the capability with which a very small flaw 33 is detected.

However, the method disclosed in Japanese Unexamined Patent Publication No. 60-205356 has the following problems: 1) The width of the ultrasonic beam after focusing is narrow. Therefore, in order that none of the flaws are left undetected in a direction of the depth of the welded portion (namely in a direction of the wall thickness of the steel pipe), many channels are required, thereby increasing facility costs. 2) There are variations in the sensitivities of the probes. Therefore, when many channels are used, it is difficult to make the sensitivities uniform. 3) It is difficult to easily and precisely set many probe skip positions. 4) It may be difficult to determine where in the wall-thickness direction a blow-hole type flaw has occurred.

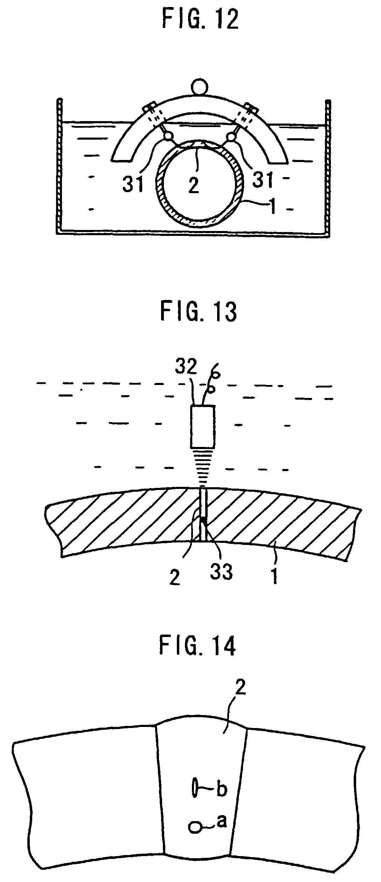

In the method disclosed in Japanese Unexamined Patent Publication No. 7-35729, the aforementioned problems 1), 2), and 3) are overcome. However, for example, when electric resistance welding and laser welding are carried out in combination, the influences of upsetting during welding not only cause the formation of spherical flaws such as that represented by symbol 'a' in Fig. 14, but also elongated flaws such as that represented by symbol 'b' in the direction of the depth of a welded portion. In this method, ultrasonic waves impinge upon the welded portion vertically, so that any flaws that are shaped like the flaw 'b' having a small reflecting area as viewed from above cannot be detected.

Disclosure of Invention

Accordingly, it is an object of the present invention to provide a method for allowing precise and on-line detection of very small, blow-hole like flaws occurring in a welded portion using ultrasonic waves, and an apparatus thereof.

To this end, according to a first invention, there is provided a method of detecting flaws in a welded portion using ultrasonic waves, the method comprising the steps of:

(a) setting ultrasonic beams emitted from an array probe at predetermined angles of refraction;
(b) performing sector scanning using the ultrasonic beams from a bottom surface side to a top surface side of the welded portion; and
(c) setting a sector scanning angle step so that scanning beams overlap each other in order to dispose each scanning line focusing point at the welded portion.

According to a second invention, there is provided an apparatus for detecting flaws in a welded portion using ultrasonic waves, the apparatus comprising:

an acoustic medium for setting ultrasonic beams emitted vertically from an array probe at predetermined angles of refraction;
wherein a sector scanning angle step is set so that scanning beams overlap each other in order to carry out sector scanning so that each scanning line focusing point is disposed at the welded portion.

Here, the scanning lines used for sector scanning refer to the center lines in the ultrasonic scanning beams.

In the first and second inventions, ultrasonic beams in which each of the scanning lines is focused by the array probe are used to detect any flaws in the welded portion, so that a high capability of detecting very small, blow-hole like flaws is achieved. In addition, sector scanning is carried out in the direction of the depth of the welded portion, during which a sector scanning angle step is set so that the scanning beams overlap each other, making it possible to detect flaws so that none of the flaws are left undetected, using only one array probe.

Sector scanning is carried out because in contrast to linear scanning the entire opening width of the array probe can be used, and as a result the ultrasonic beams can be more closely focused, thereby making it possible to increase the capability with which very small flaws are detected. In addition, since each scanning line focusing point is disposed at the welded portion, the highest detecting capability is achieved with all the scanning lines, so that the capability with which very small flaws are detected is increased. Further, even when the scanning lines differ, the same vibrator is always used, making it unnecessary to adjust variations in vibrator sensitivities.

Still further, since flaw detection is carried out at an angle, even flaws such as the flaw 'b' in Fig. 14 will always be detected.

In a method of detecting flaws in a welded portion using ultrasonic waves according to a third invention, sensitivity corrections are carried out based on the deflection angle, the angle of refraction, the beam distance, and the beam width for each scanning line used for the sector scanning, so that the scanning line sensitivities are made uniform.

An apparatus for detecting flaws in a welded portion using ultrasonic waves according to a fourth invention comprises computing means for computing the sensitivity correction value of each scanning line based on the deflection angle, the angle of refraction, the beam distance, and the beam width for each scanning line used for the sector scanning; and an attenuator or an amplifier for individually setting each scanning line sensitivity.

In the third and fourth inventions, corrections are made so that the scanning line sensitivities in the first and second inventions do not differ. Here, the scanning line sensitivities differ because of the following reasons.

1) The very small vibrator of the array probe has directional properties, so that when the deflection angles of the scanning lines differ, the scanning line sensitivities are affected.

2) The reciprocative passing ratios of the ultrasonic waves reflected by a member to be subjected to a detecting operation after entering it from the contacting water medium or the wedge, serving as an acoustic medium interposed between the array probe and the member to be subjected to a detecting operation, differ depending upon the angles of refraction of the scanning lines, so that when the angles of refraction differ, the scanning line sensitivities are affected.

3) In accordance with the distance, attenuation which occurs in the wedge or the contacting water medium (hereinafter referred to as "wedge") or in the member to be subjected to a detecting operation, so that when the beam distances of the scanning lines differ, the scanning line sensitivities are affected.

4) The focusing point beam width varies with the focusing distance, so that when the scanning line focusing distances differ, the scanning line sensitivities are affected.

To overcome these problems, in the third and fourth inventions, the sensitivity correction amount of each scanning line is determined based on the deflection angle, the angle of refraction, the beam distance, and the beam width for each scanning line used for the sector scanning, and an attenuator or an amplifier that can separately set each scanning line sensitivity is used to correct each scanning line sensitivity, whereby the scanning line sensitivities are made uniform.

In a fifth invention, a flaw-detecting gate for each scanning line used for the sector scanning is set at a temporal location including the welded portion, and while mechanically scanning the welded portion in a longitudinal direction thereof, sector scanning is carried out to detect any flaws in the welded portion. The echo heights of the signals in the flaw-detecting gate are determined in order to display them based on brightness or color as a two-dimensional pattern formed using two axes, one of which extends in the longitudinal direction of the welded portion and the other of which extends in the direction of the depth of the welded portion.

In a sixth invention, the apparatus comprises a flaw-detecting gate which can be separately set with respect to each scanning line used for the sector scanning; means for detecting the position of the array probe in the longitudinal direction of the welded portion; computing means for computing echo heights of signals in the flaw-detecting gate; and display means for displaying based on brightness or color the echo heights as a two-dimensional pattern formed using two axes, one of which extends in the longitudinal direction of the welded portion and the other of which extends in the direction of the depth of the welded portion.

In the fifth and sixth inventions, the sector scanning direction represents a position in a wall-thickness direction of the welded portion, and the mechanical scanning direction represents the welding line direction. Therefore, when the echo heights of the signals in the flaw-detecting gates set at the temporal position including the welded portion are determined in order to display them as a two-dimensional pattern based on brightness or color, an image corresponding to that viewed as if one is viewing the welded surface from directly beside it is obtained. As a result, it is possible to easily determine the location of any flaw occurring in the welded portion and the distribution thereof.

Brief Description of the Drawings

Fig. 1 is a structural view showing a first embodiment of the apparatus for detecting flaws using ultrasonic waves in accordance with the present invention.
Fig. 2 illustrates examples of the patterns of the delay times.
Fig. 3 illustrates the relationship between each scanning line reception signal and the delay time pattern corresponding thereto.
Fig. 4(a) illustrates the flaw detection results in the first embodiment.
Fig. 4(b) illustrates the flaw detection results in a conventional technology.
Fig. 5 is a structural view of a second embodiment of the apparatus for detecting flaws using ultrasonic waves in accordance with the present invention.
Fig. 6 shows the sound-pressure reciprocative passing rate.
Fig. 7 shows the sensitivity correction amount of each scanning line.
Fig. 8 shows a test piece used in the second embodiment.
Fig. 9 shows the results of the flaw detection of the test piece.
Fig. 10 is a structural view of a third embodiment of the apparatus for detecting flaws using ultrasonic waves in accordance with the present invention.
Fig. 11(a) and Fig. 11(b) illustrate the flaw detection results in the third embodiment.
Fig. 12 illustrates a conventional method of detecting flaws using ultrasonic waves.
Fig. 13 illustrates another conventional method of detecting flaws using ultrasonic waves.
Fig. 14 shows the shapes of very small flaws.

Best Modes for Carrying Out the Invention

First Embodiment

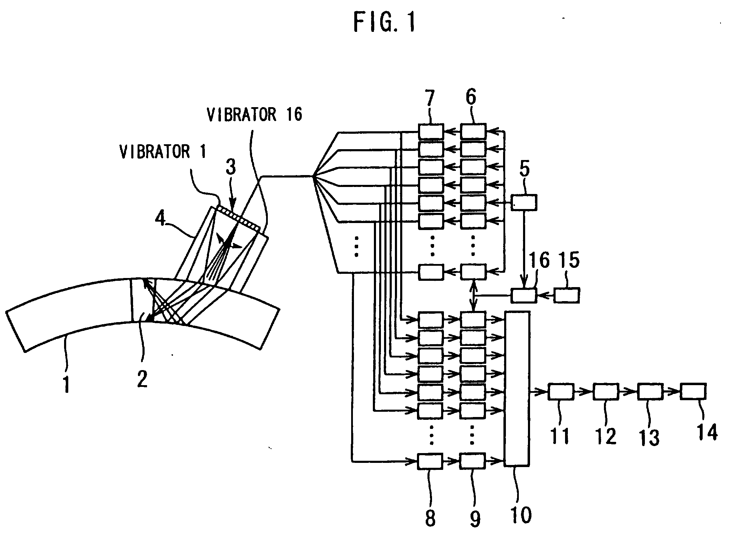

Fig. 1 is a structural view of a first embodiment of the apparatus for detecting flaws using ultrasonic waves in accordance with the present invention.
Using a wedge 4, an array probe 3 is made to contact a welded steel pipe 1 so that ultrasonic beams generated vertically are at predetermined angles of refraction. Since the form of contact is an acoustic contact, a water film of the order of 0.5 mm is formed between the wedge 4 and the welded steel pipe 1. Here, the angle of the wedge 4 (or the angle of incidence of the ultrasonic waves) is determined by the following formula so that the angles of refraction of the ultrasonic beams generated vertically are 45 degrees.

$$\theta = \sin^{-1} (\sin 45 \cdot 2510/3230)$$
$$= 33.3$$

where the transverse wave sound speed in the steel is 3230 m/s, and the longitudinal wave sound speed in the wedge is 2510 m/s. It is preferable that the wedge 4 be provided at a distance where irregular reflection does not overlap flaw echoes. In the embodiment, a steel pipe with an outside diameter of 609.6 mm and a wall thickness of 10 mm is used, so that when the angles of refraction are 45 degrees and the flaw detection skip position is 0.75 s, flaw echoes appear at a distance of 21.6 mm (or 13.4 μs) as measured in terms of the beam distance from the beam-impingement location on the steel pipe. When this is converted to the distance in the wedge, the distance is 16.8 mm, so that that the distance of the wedge 4 is slightly larger than this, that is, 25 mm. Although in the embodiment a wedge is used, a column of water may also be used to carry out the water column coupling method.
Each vibrator of the array probe 3 is driven by its corresponding transmitter of a transmitter group 7. The operation timing of each transmitter is determined by its corresponding delay device of a transmission delay device group 6. The operation of each transmitter is delayed with respect to the transmission timing occurring at a synchronizing signal generating device 5 by an amount corresponding to the delay time set at each delay device. The delay time set at each delay device is such as to change every time a pulse is repeated, thereby changing, for example, the ultrasonic wave focusing points or deflection angles every time a pulse is repeated. Such changes are periodically repeated every time more than 10 pulses but less than 20 pulses are produced. In accordance with a period, ultrasonic scanning lines are formed. Each delay time is determined by a delay time setting means 15, and is stored in a delay time storage means 16. The delay time stored in the delay time storage means 16 is read out for each corresponding scanning line in accordance with the synchronizing signal generated from the synchronizing signal generating device 5. Then, each delay time is set in the transmission delay device group 6. Here, the number of scanning lines can be freely set independently of the number of vibrators.
The ultrasonic pulses generated from each vibrator of the array probe 3 are synthesized, and each resulting pulse is transmitted as a single ultrasonic pulse through the steel pipe and reaches the welded portion 2. When there is a flaw, each ultrasonic beam is reflected back to the array probe 3. Each vibrator of the array probe 3 is formed to receive a flaw echo. Signals received thereby are amplified by a preamplifier group 8. Then, the preamplified signals are delayed by a reception delay device group 9 in accordance with the beam focusing points and the deflection angles, and added to an adding device 10. Here, the delay times set at the reception delay device group 9 are the same as the delay times set at the transmission delay device group 6. Therefore, the ultrasonic beam focusing points and deflection angles during transmission and reception are the same.

The received signal formed by a synthesizing operation by the computing device 10 is amplified to a signal level required to evaluate it at a variable amplifier 11. Then, only the flaw echo is take out from a gate 12, and the echo height is determined by an echo height computing means 13. After the determination of the echo height, a determining means 14 determines whether or not a flaw exists. In the embodiment, the synchronizing signal is such as to be generated at a frequency of 10 KHz. The array probe 3 used has 16 vibrators having nominal frequencies of 5 MHz and vibrator widths of 9 mm and being separated by a pitch of 1 mm. A beam-focusing point is at a distance of about 53 mm (in terms of the sound speed in the wedge) as measured from the distance in the wedge and the beam distance. Since the opening width is 16 mm, the beam width is about 1.7 mm. Accordingly, in order to cause the scanning beams to overlap, ultrasonic beams are arranged in a row so as to be separated by a pitch of 1 mm from the bottom surface to the top surface of the welded portion 2. When this is being done, 15 scanning lines are used, taking into consideration the fact that the positions of the array probe 3 and the welded portion 2 relative to each other change by an amount of the order of ±1 mm.

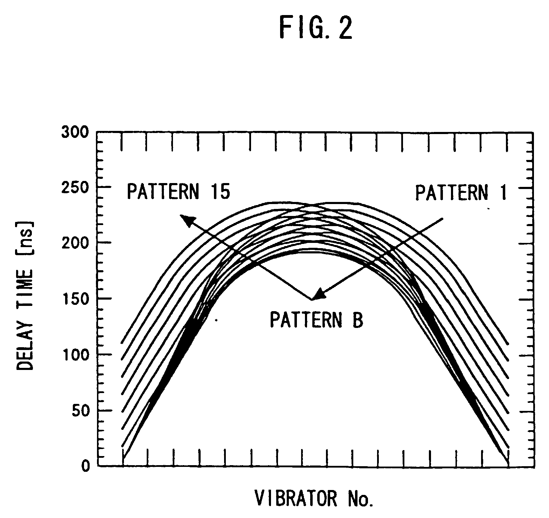

Fig. 2 shows examples of delay times. In Fig. 2, pattern 1 represents the case where delay operations are carried out from the side of vibrator 16. If, as shown in Fig. 1, vibrator 1 is the left vibrator and the vibrator 16 is the right vibrator, the ultrasonic beams that are generated when the pattern 1 occurs face downward, that is, they become beams for detecting flaws in the top surface side of the welded portion 2 when the skip is 1.0.

When pattern 8 occurs, delay operations are carried out at the same timing at both the vibrator 1 side and the vibrator 16 side, and the ultrasonic beams become beams that travel vertically from the array probe 3 in Fig. 1.

When pattern 15 occurs, delay operations are carried out from the side of the vibrator 1, and, in Fig. 1, the ultrasonic beams become beams that face upward, that is, they become beams for detecting flaws in the bottom side of the welded portion 2 when the skip is 0.5.

In each of the patterns, in order to focus the ultrasonic beams, the delay time of the middle vibrator is made long. These delay time patterns and the number of scanning lines can be suitably set in accordance with the outside diameter and the wall thickness of the steel pipe.

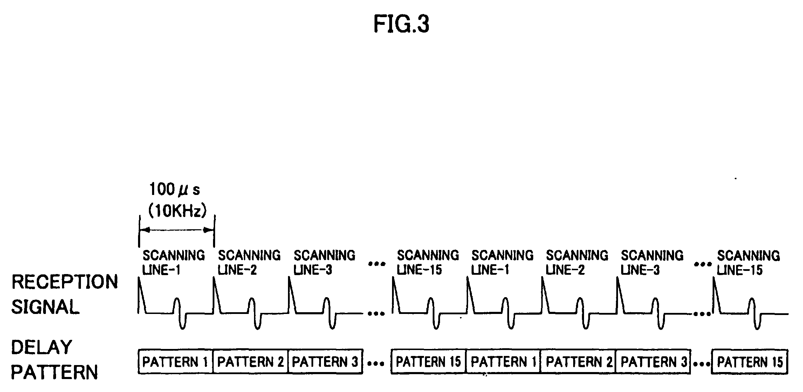

Fig. 3 shows reception signals obtained using such a flaw-detecting apparatus. They are synchronized with a 10-KHz synchronizing signal generated by the synchronizing signal generating device 5. Then, they are synthesized in accordance with their corresponding delay patterns in order to form a transmission signal. After transmission of the signal, if a flaw exists, a flaw echo is obtained from the portion where the flaw exists. Here, the delay time patterns change one after the other every time a pulse is repeated, and after one cycle from the pattern 1 to the pattern 15, the pattern returns to the pattern 1, and the cycle is repeated. In this embodiment, the repetition frequency of the pattern 1 is 666.6 Hz. This is sufficient to automatically detect flaws during welding of the steel pipe, so that it is possible to carry out on-line detection. In other words, when the steel pipe welding speed is 10 MPM, the pulse density of the scanning lines of pattern 1 in an axial direction of the pipe (or in a longitudinal direction of the welded portion) is 10 MPM/60 S/666 Hz = 0.25 mm/pulse, so that the flaw detection can be carried out with a sufficiently high pulse density in the axial direction of the pipe.

On the other hand, in the wall-thickness direction (or the direction of the depth of the welded portion), changes in the delay time pattern in accordance with pulse repetition result in changes in the ultrasonic beam focusing points and deflection angles, making it possible to carry out flaw detection while gradually changing the flaw-detecting position from the outer surface side to the inner surface side in the wall thickness direction. As a result, since the ultrasonic beams focused at the welded portion 2 can be used to detect flaws at a high speed and with small pitches from the wall-thickness direction to the axial direction of the pipe, it is possible to increase the capability with which the flaw-detecting apparatus detects very small, blow-hole like flaws.

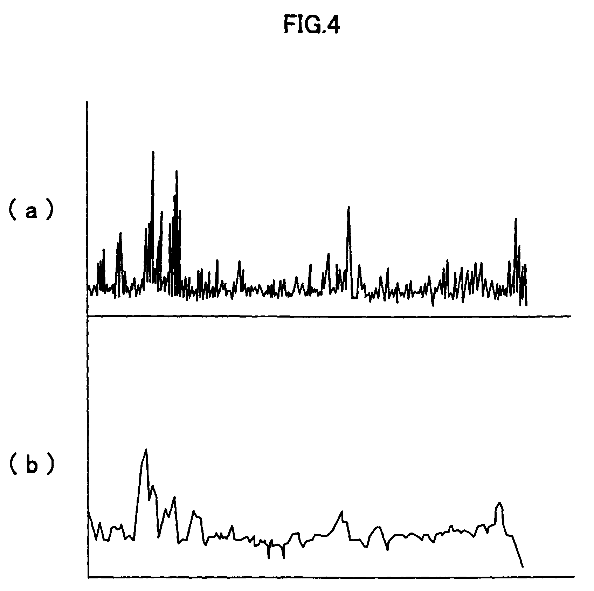

Fig. 4(a) shows the results of the detection of actual flaws using the apparatus of the present invention. Sector scanning of the welded portion 2 is carried out immediately after carrying out continuous welding of the steel pipe while moving the array probe 3 in the axial direction of the pipe. Then, the results from the echo height computing means 13 are output on a recording meter. These outputs correspond to the results shown in Fig. 4(a). Fig. 4(b), provided for comparison purposes, shows the results obtained from a conventional technology using a probe based on a plane-type single vibrator whose frequency is 5 MHz and whose dimensions are 8 mm x 9 mm. The present invention makes it possible to considerably increase the capability of detecting flaws.

Second Embodiment

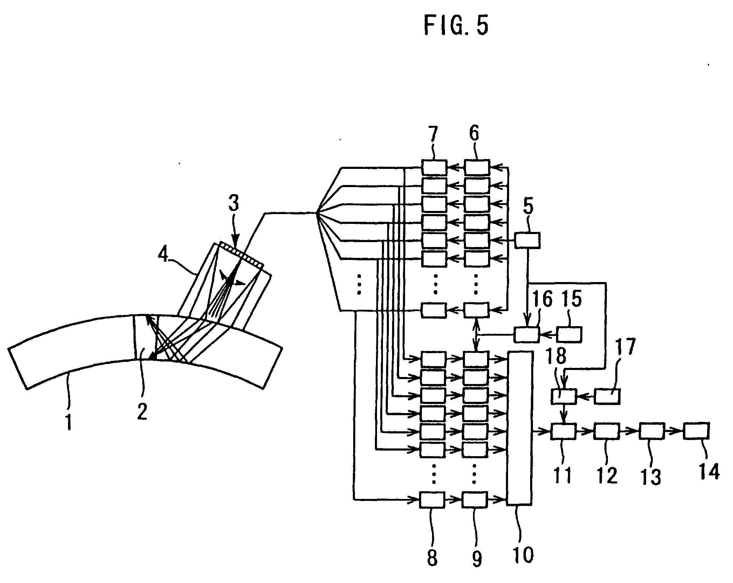

Fig. 5 is a structural view of a second embodiment of the apparatus for detecting flaws using ultrasonic waves in accordance with the present invention. The structure of the apparatus of this embodiment differs from that shown in Fig. 1 in that a sensitivity correction amount computing means 17 and a sensitivity correction amount storage means 18 are added. In the embodiment, the sensitivity correction amount computing means 17 is realized using a personal computer. In the sensitivity correction amount storage means 18 is stored the sensitivity correction amount corresponding to each scanning line obtained by the sensitivity correction amount computing means 17. In accordance with the synchronizing signal from the synchronizing signal generating device 5, that is, each time a pulse is repeated, a variable amplifier 11 reads out a sensitivity correction amount of a corresponding scanning line from the sensitivity correction amount storage means 18 in order to change the sensitivity each time a pulse is repeated.

The sensitivity correction amount is computed as follows.

(1) The sensitivity correction amount required due to the deflection angle is obtained based on the fact that the directional property of a very small vibrator is determined by the following formula:

$$G1(\theta si) = \frac{\sin\left(\frac{kd}{2} \sin \theta si\right)}{\frac{kd}{2} \sin \theta si}$$

where $\theta si$ is the deflection angle for every scanning line, k is the wavelength or $2\pi/\lambda$, and d is the width of the very small vibrator. Taking into account both the transmission and the reception of signals, the sensitivity correction amount (dB) required due to the deflection angle is represented by the following formula:

$$\Delta G1(i) = 2 \times 20 \log (1/G1 (\theta si))$$

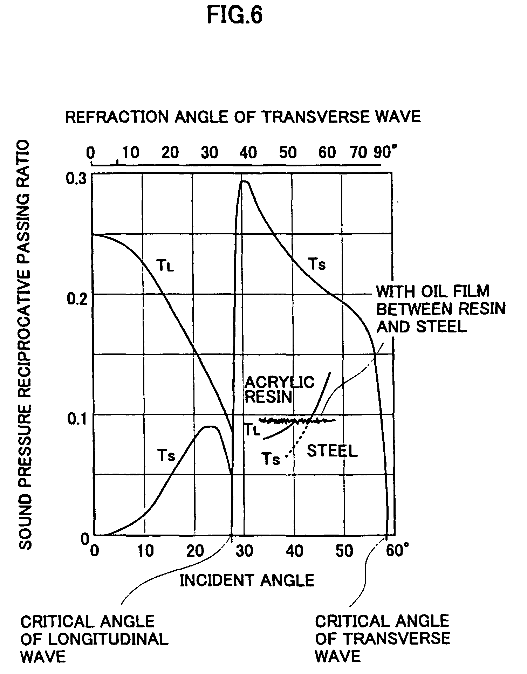

(2) The sensitivity correction amount required due to the angle of refraction is obtained based on the relationship between the angle of refraction and the sound pressure reciprocative passing ratio. Fig. 6 shows the sound pressure reciprocative passing ratio. In Fig. 6, $T_L$ represents a sound pressure reciprocative passing ratio for longitudinal waves, while $T_S$ represents a sound pressure reciprocative passing ratio for transverse waves. In acrylic resin, the longitudinal wave sound speed $C_{1L}$ = 2730, and the transverse wave sound speed $C_{1S}$ = 1430; and in steel the longitudinal wave sound speed $C_{2L}$ = 5900, and the transverse wave sound speed $C_{2S}$ = 3230. The density of acrylic resin is 1.18, while that of steel is 7.7. Since the sound pressure reciprocative passing ratio is as shown in Fig. 6, if the angle of refraction is determined, the sound pressure reciprocative passing ratio is also determined. In the embodiment, the curves of Fig. 6 are divided into sections to make approximations using a polynomial expression, and from the refractive angle $\theta i$ the sound pressure reciprocative passing ratio P $(\theta i)$ is calculated. From the calculated value, the sensitivity correction amount (dB) is determined by the following formula. The sensitivity correction amount (dB) can be directly obtained by calculating the passing ratio and the angle of refraction of Fig. 6, without making approximations using the polynomial expression.

$$\Delta G2(i) = 20 \log (0.29/P(\theta i))$$

(3) The sensitivity correction amount required due to the attenuation in the wedge or the contacting water medium, or in the member that is subjected to a detecting operation is determined, taking into account the attenuation coefficient in accordance with the distance in the wedge and the attenuation coefficient in accordance with the transmission distance in the member that is subjected to a detecting operation. In other words, from the distance Wi that each scanning line extends in the wedge and the transmission distance Ui in the member that is subjected to a detecting operation, the sensitivity correction amount is determined using the following formula:

$$\Delta G3(i) = \alpha \ 20 \log (Wi/W1) + \beta \ 20 \log (Ui/U15)$$

Here, $\alpha$ and $\beta$ are the attenuation coefficients of the wedge and the member subjected to a detecting operation, respectively. For the wedge, the 1st scanning line is used as a standard scanning line, and for the member subjected to a detecting operation, the 15th scanning line is used as a standard scanning line. This is because these scanning lines are attenuated the least.

(4) The sensitivity correction amount required due to the focusing point beam width is determined, taking into account the aforementioned focusing point band width. When the opening width is D, and the distance of the aforementioned point is F, and the wavelength is $\lambda$, the beam width b is:

$$b \approx \lambda(F/D)$$

Therefore, taking into account each scanning line focal distance,

$$\Delta G4(i) = 20 \log (Fi/F15)$$

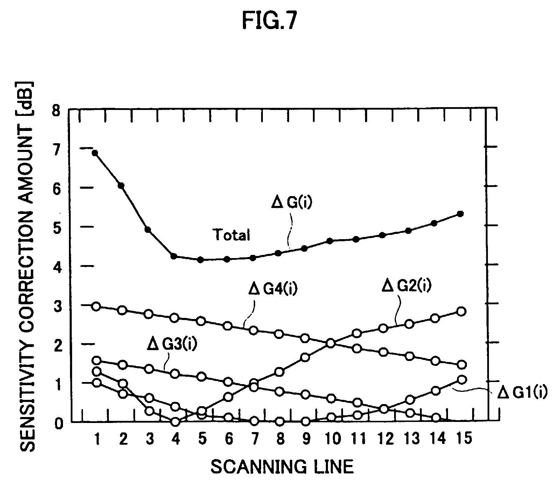

All of the sensitivity correction amounts thus obtained are added up, and the value obtained by the following formula becomes the sensitivity correction amount of each scanning line. Fig. 7 shows an example of the sensitivity correction amount of each scanning line.

$$\Delta G(i) = \Delta G1(i) + \Delta G2(i) + \Delta G3(i) + \Delta G4(i)$$

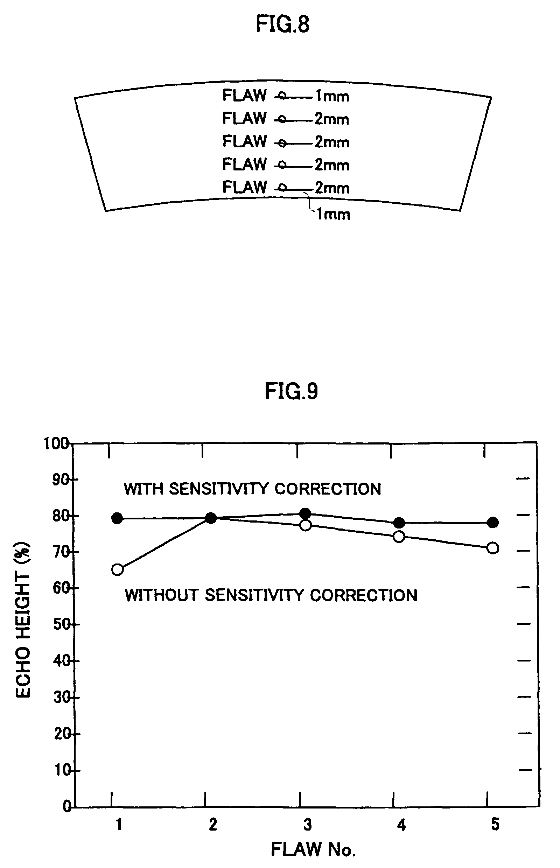

Hereunder, a description will be given to the effects obtained when the sensitivity correction is carried out. Fig. 8 illustrates the test piece used. The test piece has five horizontal holes, each with a diameter of 0.5 mm, formed from the outer surface side to the inner surface side of a welded portion of a steel pipe (whose outside diameter is 609.6 mm and wall thickness is 10 mm). Using this test piece, the echo height of each flaw is measured when the sensitivity correction is not carried out and when the sensitivity correction is carried out. Fig. 9 shows the measurement results. Here, the degree of amplification is adjusted so that the echo height of the most strongly received scanning line from flaw 2 illustrated in Fig. 8 becomes 80%.

As shown in Fig. 9, when the sensitivity correction is not carried out, the echo heights vary with the positions of the flaw even though the flaws are the same size. On the other hand, when the sensitivity correction is carried out, the echo heights for all of the flaws are the same.

Third Embodiment

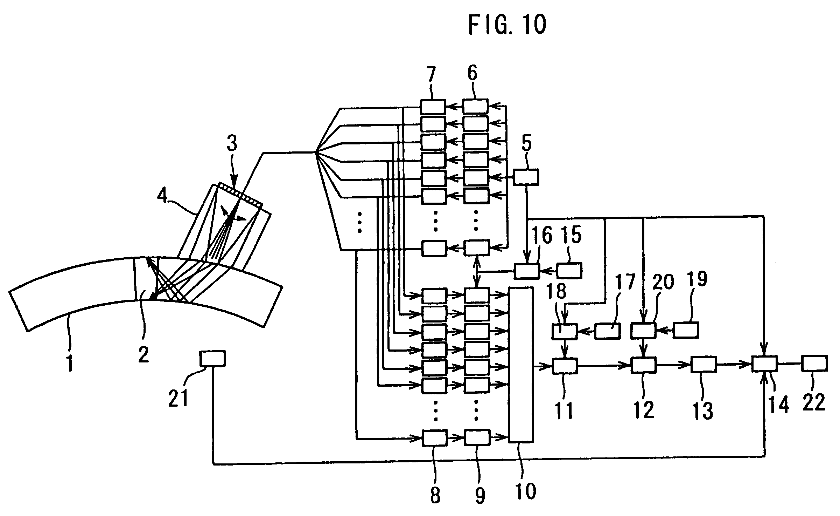

Fig. 10 is a structural view of a third embodiment of the apparatus for detecting flaws using ultrasonic waves in accordance with the present invention. The apparatus differs from that illustrated in Fig. 5 in that a gate position computing means 19, a gate position storage means 20, a probe position detecting means 21, and an image display device 22 are added.

In the embodiment, the gate position computing means 19 is realized using a personal computer. The gate position storage means 20 stores the gate position corresponding to each scanning line obtained by the gate position computing means 19. In accordance with a synchronizing signal from the synchronizing signal generating device 5, that is, each time a pulse is repeated, the gate 12 extracts a flaw echo for a gate position corresponding to a scanning line. This allows only a flaw echo from the welded portion to be extracted. The echo height of a signal in the gate for each scanning line is obtained by the echo height computing means 13, and is displayed on the display means 22 based on brightness or color.

The display means 22 uses the information from the probe position detecting means 21 and the synchronizing signal generating device 5. More specifically, the probe position detecting means 21 indicates the position in an axial direction of the pipe (or in a longitudinal direction of the welded portion), while the synchronizing signal generating device 5 indicates the position in a wall thickness direction (or in a direction of the depth of the welded portion). With these positions defining the X and Y coordinates, the echo heights are displayed, whereby the result of inspection of the joined surfaces of the welded portion is displayed as a two-dimensional image.

In the embodiment, a pulse generating device for following the transportation of the steel pipe is used for the probe position detecting means 21, and a computer is used for the display means 22. Pulses are generated from the pulse-generating device every 0.5 mm, and the computer is made to increase the coordinates in the axial direction of the steel pipe based on the pulse signal. When the transporting speed of the steel pipe is 10 MPM and the number of scanning lines is 15, the pulse density per scanning line is 0.25 mm, so that an echo height is displayed at 0.25mm/1 dot. Since the number of dots of the screen is 640 x 400, it is possible to display along a horizontal direction of the screen echo heights of 160 mm in the axial direction of the pipe. The display operation is started from the left end of the screen. When the display operation to the right end of the screen is completed, a returning operation is made to the left end of the screen.

In the wall-thickness direction that is the sector scanning direction (or the direction of the depth of the welded portion), two types of signals from the synchronizing signal generating device 5 are made available. These are a signal generated each time a pulse occurs and a signal generated every one scanning line period. Based on these signals, the computer determines the coordinates in a vertical direction.

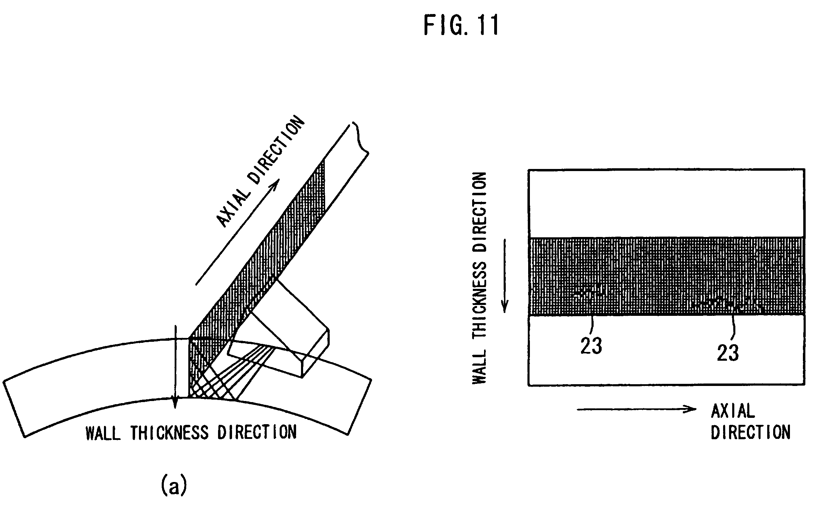

Fig. 11 shows the flaw detection results in the embodiment. As shown-in Fig. 11(b), based on the transporting speed of the pipe, a scrolling operation is carried out in a horizontal direction on the screen by the display means 22 about every one second in order to display the sizes and the locations of the flaws 23 in the welded portion as two-dimensional patterns formed using two axes, one of which extends in the axial direction of the pipe and the other of which extends in the wall-thickness direction, respectively. This makes it possible to easily determine the distribution of the occurrences of the very small, blow-hole like flaws in on-line real time. Since the entire welded portion can be subjected to minute flaw detection in the direction of the depth of the welded portion and the longitudinal direction of the welded portion using ultrasonic beams that are focused with a high density, any very small, blow-hole like flaws can be precisely detected on-line using ultrasonic waves, making it possible to easily determine the locations of the detected flaws.

**Claims**

1. A method of detecting flaws in a welded portion using ultrasonic waves, the method comprising the steps of:

(a) setting ultrasonic beams emitted from an array probe at predetermined angles of refraction;
(b) performing sector scanning using the ultrasonic beams from a bottom surface side to a top surface side of the welded portion; and
(c) setting a sector scanning angle step in the step of performing sector scanning so that scanning beams overlap each other in order to dispose each scanning line focusing point at the welded portion.

2. A method of detecting flaws in a welded portion using ultrasonic waves according to Claim 1, further comprising the step of performing sensitivity corrections based on the deflection angle, the angle of refraction, the beam distance, and the beam width for each scanning line used for the sector scanning, so that the scanning line sensitivities are made uniform.

3. A method of detecting flaws in a welded portion using ultrasonic waves according to Claim 1, wherein the sector scanning performing step comprises the steps of:

setting a flaw-detecting gate for each scanning line used for the sector scanning at a temporal position including the welded portion;
detecting any flaws in the welded portion by the sector scanning while mechanically scanning the welded portion in a longitudinal direction thereof; and
determining echo heights of signals in the flaw-detecting gate in order to display them based on brightness or color as a two-dimensional pattern formed using two axes, one of which extends in the longitudinal direction of the welded portion and the other of which extends in a direction of the depth of the welded portion.

4. An apparatus for detecting flaws in a welded portion using ultrasonic waves, the apparatus comprising:

an array probe; and
an acoustic medium for setting ultrasonic beams emitted from the array probe at predetermined angles of refraction;
wherein a sector scanning angle step is set so that scanning beams overlap each other in order to carry out the sector scanning so that each scanning line focusing point is disposed at the welded portion.

5. An apparatus for detecting flaws in a welded portion using ultrasonic waves according to Claim 4, further comprising means for computing a sensitivity correction amount of each scanning line based on the deflection angle, the angle of refraction, the beam distance, and the beam width for each scanning line used for the sector scanning; and an attenuator or an amplifier for separately setting the sensitivity of each scanning line.

6. An apparatus for detecting flaws in a welded portion using ultrasonic waves according to Claim 4, further comprising a flaw-detecting gate which is separately set for each scanning line used for the sector scanning; means for detecting the position of the array probe in a longitudinal direction of the welded portion; means for computing echo heights of signals in the flaw-detecting gate; and display means for displaying based on brightness or color the echo heights as a two-dimensional pattern formed using two axes, one of which extends in the longitudinal direction of the welded portion and the other of which extends in a direction of the depth of the welded portion.

# FIG. 1

# FIG. 2

**FIG.3**

$100 \mu s$
$(10KHz)$

RECEPTION
SIGNAL

SCANNING LINE-1 · SCANNING LINE-2 · SCANNING LINE-3 ··· SCANNING LINE-15 · SCANNING LINE-1 · SCANNING LINE-2 · SCANNING LINE-3 ··· SCANNING LINE-15

DELAY
PATTERN

| PATTERN 1 | PATTERN 2 | PATTERN 3 | ··· | PATTERN 15 | PATTERN 1 | PATTERN 2 | PATTERN 3 | ··· | PATTERN 15 |

FIG.4

(a)

(b)

FIG. 5

# FIG.6

REFRACTION ANGLE OF TRANSVERSE WAVE

SOUND PRESSURE RECIPROCATIVE PASSING RATIO

WITH OIL FILM
BETWEEN RESIN
AND STEEL

ACRYLIC
RESIN

STEEL

INCIDENT ANGLE

CRITICAL ANGLE
OF LONGITUDINAL
WAVE

CRITICAL ANGLE
OF TRANSVERSE
WAVE

# FIG.7

## FIG.8

FLAW ⊸——1mm
FLAW ⊸——2mm
FLAW ⊸——2mm
FLAW ⊸——2mm
FLAW ⊸——2mm
⌐1mm

## FIG.9

WITH SENSITIVITY CORRECTION

WITHOUT SENSITIVITY CORRECTION

ECHO HEIGHT (%)

FLAW No.

FIG. 10

FIG. 11

23    23

AXIAL DIRECTION

WALL THICKNESS DIRECTION

AXIAL DIRECTION

WALL THICKNESS DIRECTION

(a)

FIG. 12

FIG. 13

FIG. 14

# INTERNATIONAL SEARCH REPORT

| International application No. |
|---|
| PCT/JP98/05607 |

| A. CLASSIFICATION OF SUBJECT MATTER |
|---|
| Int.Cl⁶ G01N29/10 |

According to International Patent Classification (IPC) or to both national classification and IPC

| B. FIELDS SEARCHED |
|---|
| Minimum documentation searched (classification system followed by classification symbols)<br>Int.Cl⁶ G01N29/00-29/28 |

Documentation searched other than minimum documentation to the extent that such documents are included in the fields searched

| Jitsuyo Shinan Koho | 1922-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>Y | JP, 57-147053, A (Tokyo Shibaura Electric<br>Co., Ltd.),<br>10 September, 1982 (10. 09. 82),<br>Full text ; Figs. 1 to 5 (Family: none) | 1, 4<br>2, 3, 5, 6 |
| Y | JP, 4-265856, A (Hitachi Engineering Co., Ltd.),<br>22 September, 1992 (22. 09. 92),<br>Full text ; Figs. 1 to 8 (Family: none) | 2, 3, 5, 6 |
| Y | JP, 61-253458, A (Toshiba Corp.),<br>11 November, 1986 (11. 11. 86),<br>Full text ; Figs. 1 to 5 (Family: none) | 2, 3, 5, 6 |
| Y | JP, 57-153258, A (Tokyo Shibaura Electric<br>Co., Ltd.),<br>21 September, 1982 (21. 09. 82),<br>Full text ; Figs. 1 to 7 (Family: none) | 3, 6 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search<br>5 January, 1999 (05. 01. 99) | Date of mailing of the international search report<br>12 January, 1999 (12. 01. 99) |
|---|---|
| Name and mailing address of the ISA/<br>Japanese Patent Office | Authorized officer |
| Facsimile No. | Telephone No. |

Form PCT/ISA/210 (second sheet) (July 1992)